# EUROPÄISCHE PATENTSCHRIFT

(11) **EP 0 459 202 B1**
(45) Veröffentlichungstag und Bekanntmachung des Hinweises auf die Patenterteilung: **07.12.1994**
(21) Anmeldenummer: 91107686.7
(22) Anmeldetag: 11.05.1991
(51) Int. Cl.: B60R 5/04

(54) **Abdeckrollo**
Roller blind
Rideau écran

(30) Priorität: 24.05.1990 DE 4016708
(43) Veröffentlichungstag der Anmeldung: 04.12.1991
(73) Patentinhaber: BAUMEISTER + OSTLER GmbH & Co., D-73773 Aichwald (DE)
(72) Erfinder: Ament, Eduard, D-7307 Aichwald 2 (DE)
(74) Vertreter: Rüger, Rudolf, Dr.-Ing.

(56) Entgegenhaltungen:
- WO-A-90/02665
- DE-A- 2 032 144
- DE-A- 3 310 502
- DE-A- 3 314 444
- DE-A- 3 413 966
- US-A- 4 285 539
- US-A- 4 756 325
- RESEARCH DISCLOSURE. no. 227, März 1983, HAVANT GB Seiten 108 - 110; "DYMETROLELASTOMERIC TAPE DRIVES AUTOMOTIVE ENERGY TRANSFER SYSTEMS"

## Beschreibung

Die Erfindung betrifft ein Abdeckrollo für den Laderaum eines PKW, mit den Merkmalen des Oberbegriffs des Anspruches 1.

Aus der DE-PS 38 19 766 ist ein Abdeckrollo für den Lade- oder Kofferraum, insbesondere von Kombi-PKW beschrieben. Das bekannte Rollo weist eine Rollobahn auf, die von mehreren, parallel zueinander verlaufenden Streben getragen ist. Die Streben laufen endseitig in zwei parallel zueinander sich erstreckenden Führungsschienen, die oberhalb der Zugangsöffnung des Stauraums in der Karosserie angebracht sind.

Jede Strebe enthält endseitig ein federvorgespanntes Gleitstück, das in der im Querschnitt etwa C-förmigen Führungsschiene gleitet. Die federvorgespannten Gleitstücke, die mit einem Ende in der zugehörigen rohrförmigen Strebe stecken, verhindern einerseits ein Klappern der Streben in den Führungen und andererseits beugen sie bis zu einem gewissen Grad einem Verklemmen der Streben vor, wenn das Rollo von Hand zusammengeschoben wird. Voraussetzung dafür ist allerdings, daß die Streben zum Öffnen des Rollos etwa in der Mitte ihrer Längserstreckung angefaßt und geschoben werden. Wenn allerdings versucht wird, das Rollo zu öffnen, indem die Strebe nur in der Nähe eines ihrer Enden bewegt wird, können Klemmerscheinungen auch durch die federvorbelasteten Gleitstücke nicht verhindert werden.

Die DE-A-33 10 502 zeigt eine Führungsvorrichtung für ein Schiebedach oder Schiebehebedach mit Mittelantrieb. Das Schiebedach sitzt in einer Öffnung im Fahrzeugdach und ist dort mittels Führungseinrichtungen geführt. Die Führungseinrichtungen umfassen zwei Zahnstangen, die auf Dachlängsholmen angeordnet sind, die sich seitlich neben der Dachöffnung befinden. An dem Schiebedach ist eine Transportbrücke vorgesehen, die durch eine an ihrem mittleren Bereich angreifende Antriebseinrichtung im Sinne des Öffnens und des Schließens des Schiebedachs bewegbar ist. Um ein Schrägstellen der Transportbrücke und damit ein Verklemmen auzuschließen, erstreckt sich parallel zu der Transportbrücke eine Führungswelle, die endseitig Ritzel trägt. Die Ritzel kämmen mit den in den Dachholmen enthaltenen Zahnstangen.

Ausgehend hiervon ist es Aufgabe der Erfindung, ein Abdeckrollo für Kombi-PKW zu schaffen, das klemmfrei und klapperfrei geführt ist.

Diese Aufgabe wird erfindungsgemäß durch das Abdeckrollo mit den kennzeichnenden Merkmalen des Anspruches 1 gelöst.

Die Synchronisiereinrichtung überträgt die Bewegung an einem Ende der betätigten Strebe selbsttätig auf das andere Ende der Strebe, so daß es synchron mit dem betätigten Ende geführt wird. Die Strebe kann sich zwischen den Führungsschienen nicht mehr schrägstellen und verklemmen.

Da in aller Regel der Benutzer nur jene Strebe bedient, die ihm unmittelbar benachbart ist, genügt es, wenn lediglich die Strebe, die beim Öffnen oder Schließen der Abdeckung den größten Weg zurücklegt, mit der Synchronisiereinrichtung versehen ist.

Ein Klappern der Strebe in den Führungsschienen wird weitgehend vermieden, wenn die im Querschnitt etwa C-förmigen Führungsschienen im Bereich ihres Längsschlitzes Führungsflächen tragen, die in Richtung auf das Innere der Führungsschiene konvergieren und die Streben mit federvorgespannten Endstücken versehen sind, die hierzu komplementär sind.

In der Zeichnung sind Ausführungsbeispiele des Gegenstandes der Erfindung dargestellt. Es zeigen:
- Fig. 1: ein über dem Laderaum eines Kombiwagens angeordnetes, teilweise ausgezogenes Abdeckrollo gemäß der Erfindung in einer perspektivischen Darstellung, wobei eine Seitenwand des PKW weggebrochen ist,
- Fig. 2: eine Strebe des Abdeckrollo nach Fig. 1 in einem Schnitt durch eines ihrer Enden,
- Fig. 3: die Strebe nach Fig. 2 in einer Draufsicht und
- Fig. 4: die Synchronisiereinrichtung für das Abdeckrollo nach Fig. 1, in einer stark schematisierten perspektivischen Darstellung.

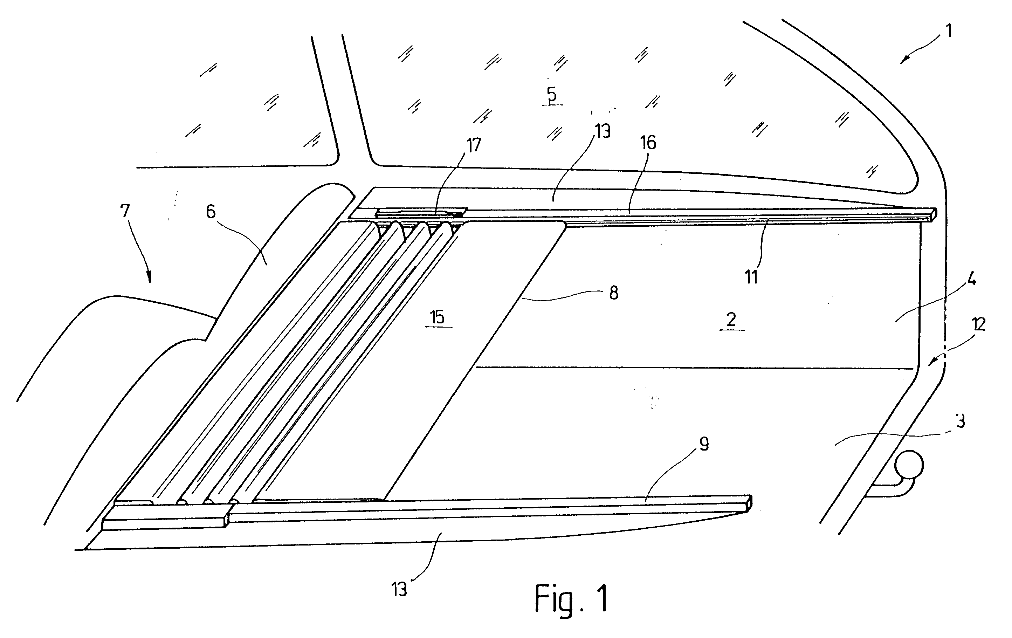

In Fig. 1 ist die aufgebrochen dargestellte Heckpartie 1 eines Kombiwagens perspektivisch veranschaulicht, dessen Laderaum 2 von einem Boden 3 sowie zwei Seitenwänden begrenzt ist, von denen nur die rechte Seitenwand 4 erkennbar ist. Über der Seitenwand 4 befindet sich ein hinteres Seitenfenster 5, während den vorderen Abschluß des Laderaumes 2 eine Rücksitzlehne 6 einer Rücksitzbank 7 bildet.

Zum Abdecken des Laderaums 2 ist ein Abdeckrollo 8 vorgesehen, das sich knapp unterhalb der Unterkante des hinteren Seitenfensters 5 und etwa auf Höhe der Oberkante der Rücksitzlehne 6 befindet. Das Abdeckrollo 8 weist zwei parallel und im Abstand zueinander befindliche gerade Führungsschienen 9 und 11 auf, die knapp unterhalb der Unterkante des benachbarten Seitenfensters 5 an jeder der beiden Seitenwände 4 unlösbar befestigt sind. Die Führungsschienen 9 und 11 erstrecken sich von der Rückseite der Rücksitzlehne 6 bis zu einer Hecköffnung 12 des PKW, die durch eine nicht veranschaulichte Ladeklappe zu verschließen ist. Der Zwischenraum zwischen den Führungsschienen 9 und 11 und den nach außen bombierten Seitenwänden 4 ist durch entsprechend angepaßte Füllstücke 13 ausgefüllt.

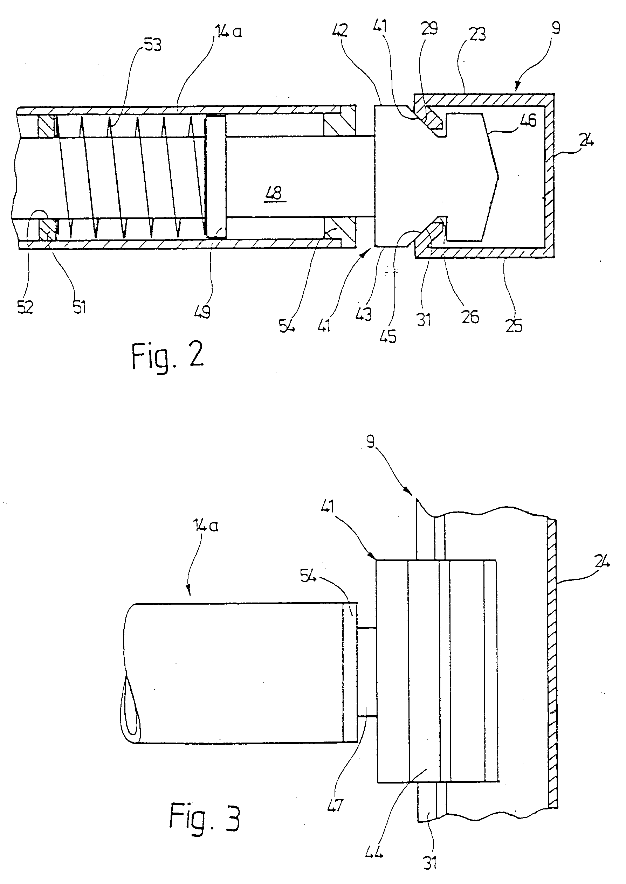

Die Führungsschienen 9 und 11 dienen der Führung von sechs rohrförmigen Streben, die wegen der Darstellung in Fig. 1 nicht weiter erkennbar sind. Sie sind dagegen in verminderter Anzahl in Fig. 2 zu sehen und mit den Bezugszeichen 14a bis 14d versehen. Die rohrförmigen Streben 14a bis 14d tragen eine Rollobahn 15, an deren Unterseite sie äquidistant verteilt befestigt sind. Die Rollobahn 15 ist ein rechteckiger und undurchsichtiger Kunststoffolienzuschnitt, der gegebenenfalls eine Stoffverstärkung aufweist und dessen Breite gleich dem Abstand der beiden Führungsschienen 9 und 11 voneinander ist, während die Länge des Zuschnitts dem Abstand der Rückseite der Rücksitzlehne 6 von der Ladeöffnung 12 entspricht. Die letzte Strebe 14a ist mit der der Ladeöffnung 12 benachbarten Kante der Rollobahn 15 verbunden, während die am weitesten vorne in dem PKW liegende Strebe 14d bei eingesetztem Abdeckrollo 8 in der Nähe der Rücksitzlehne 6 arretiert ist. Durch Verschieben der letzten Strebe 14a in Richtung auf die Ladeöffnung 12 läßt sich die Rollobahn 15 über dem Laderaum 2 ausbreiten, um den Laderaum nach oben abzuschließen. Andererseits kann die Rollobahn 15 auch wiederum in Richtung auf die Rücksitzlehne 6 zurückgeschoben werden, wobei die Rollobahn 15 zwischen den Streben 14a bis 14d herunterhängende Falten bildet, wenn die Streben dicht zusammengeschoben sind. Dies ist der geraffte oder vollständig aufgezogene Zustand des Abdeckrollos 8.

Um die Rollobahn 15 zusammen mit den daran befestigten Streben 14a bis 14d leicht herausnehmen zu können, wenn der Laderaum 2 durch Umlegen des Rücksitzes 7 vergrößert werden soll, sind die beiden Führungsschienen 9 und 11 in gleicher Weise in einen längeren,in dem Kraftfahrzeug fest installierten Abschnitt 16 und ein herausnehmbares Führungsstück 17 aufgeteilt, das sich bei beiden Führungsschienen 9 und 11 in der Nähe der Rücksitzlehne 6 befindet und eine Länge aufweist, die dem Platzbedarf entspricht, den die Streben 14a bis 14d bei völlig geraffter Rollobahn 15 erfordern.

Da es nachfolgend für das Verständnis der Anordnung nicht mehr auf das herausnehmbare Führungsstück ankommt, sind in den weiteren Figuren die beiden Führungsschienen 9 und 11 durchgehend veranschaulicht.

Im folgenden ist nunmehr auf Fig. 2 Bezug genommen, in der ausschließlich die zur Erläuterung notwendigen Teile des Abdeckrollos 8 stärker schematisiert und zum Teil unproportional vergrößert gezeigt sind.

Um zu verhindern, daß beim Öffnen und Schließen des Abdeckrollos 8 sich die Streben 14a bis 14c zwischen den beiden Führungsschienen 9 und 11 verkanten, ist eine Synchronisiereinrichtung 18 vorgesehen, deren Zweck es ist, die Bewegung, die das eine Ende der Strebe 14a vollführt, zwangsläufig auf das andere Ende dieser Strebe 14a zu übertragen, damit immer die rechtwinklige Stellung der Strebe 14a zu den beiden parallel verlaufenden Führungsschienen 9 und 11 beibehalten wird, selbst dann, wenn der Benutzer zum Öffnen und Schließen des Abdeckrollos 8 die Strebe 14a nur in der Nähe eines ihrer beiden Enden anfaßt und in den Führungsschienen 9 und 11 verschiebt. Die Synchronisiereinrichtung 18 enthält zu diesem Zweck als wesentliche Bestandteile ein Getriebe 19 sowie zwei biegsame längsverschiebliche Getriebeglieder in Gesalt von zwei Zahnstangen 21 und 22. Im einzelnen ist der Aufbau wie folgt:
Da beide Führungsschienen 9 und 11 zueinander spiegelbildlich, aber sonst gleich sind, genügt es, nachfolgend im einzelnen auf die Führungsschiene 9 Bezug zu nehmen, denn sinngemäß das gleiche gilt auch für die Führungsschiene 11, weshalb dort dieselben Bezugszeichen eingetragen sind.

Die Führungsschiene 9 ist ein im wesentlichen in Längsrichtung geschlitztes Vierkantrohr, das von drei geschlossenen Seiten 23, 24, 25 begrenzt ist. Der geschlossenen Seite 24 gegenüberliegend befindet sich ein in Längsrichtung der Führungsschiene 9 durchgehender Schlitz 26, der an seinen beiden Rändern 27 und 28 von zwei Schrägflächen 29 und 31 begrenzt ist. Die beiden Schrägflächen 29 und 31 konvergieren trichterförmig in das Innere der Führungsschiene 9. Es entsteht auf diese Weise ein etwa C-förmiges Querschnittsprofil, wobei beide Führungsschienen 9 und 11 mit ihren Schlitzen 26 aufeinander zu weisen.

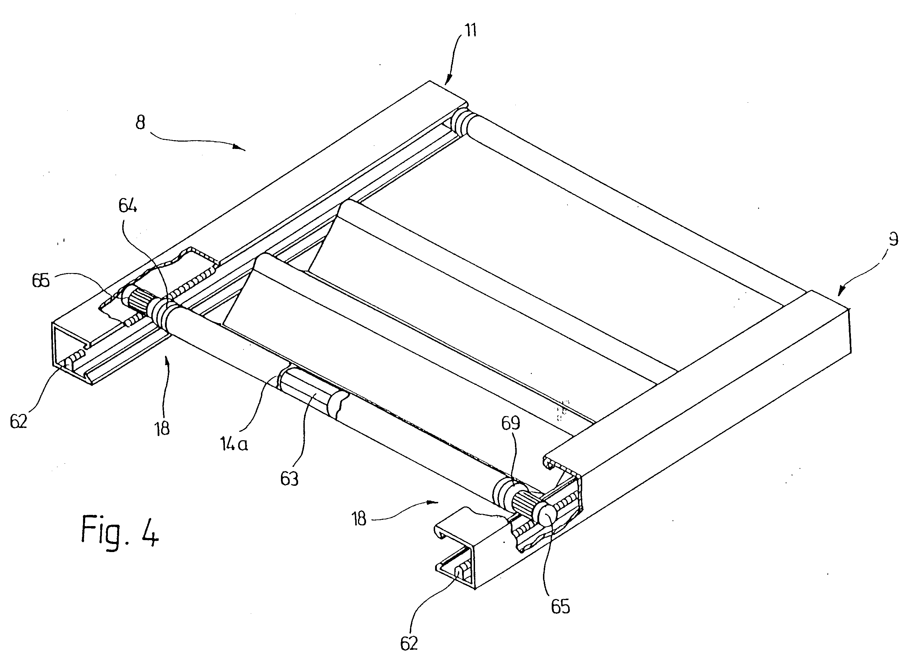

Um die Strebe 14a in den Führungsschienen 9 und 11 zu führen, ist sie an beiden Enden, wie in den Fig. 3 und 4 gezeigt, gestaltet. Beide Enden der Strebe 14a sind in der gleichen Weise ausgeführt, weshalb es genügt, beispielsweise das rechte Ende, das Fig. 3 zeigt, im einzelnen zu erläutern. Das entsprechende Ende der Strebe 14a ist mit einem etwa quaderförmigen Führungsstück 41 versehen, das mit seiner Längserstreckung parallel zu der Längsachse der Führungsschiene 9 liegt. In seinen zueinander parallellaufenden Seiten 42 und 43 sind zwei in Längsrichtung laufende, um Querschnitt V-förmige Nuten 44, 45 vorgesehen, die eine zu den Führungsflächen 31 und 29 komplementäre Seitenfläche aufweisen.

Auf seiner von der Führungsschiene 9 abliegenden Seite ist an das Führungsstück 41 ein zylindrischer Zapfen 48 angeformt, der in den Innenraum der rohrförmigen Strebe 14a hineinreicht. Im Abstand zu dem Führungsstück 41 ist der Zapfen 48 mit einem Bund 49 versehen, dessen Außendurchmesser etwa der lichten Weite der Strebe 14a entspricht. Weiter innen in der Strebe 14a befindet sich eine dort mit Preßsitz gehalterte ringförmige Scheibe 51, durch deren Bohrung 52 der Zapfen 48 hindurchführt, der ein Stück weit über die ringförmige Scheibe 51 hinaus verlängert ist. Zwischen der ringförmigen Scheibe 51 und dem Bund 49 wirkt eine schraubenförmige Druckfeder 53, die den Zapfen 48 umgibt und auf diese Weise das Führungsstück 41 in Richtung auf die Führungsschiene 9 zu vorspannt, derart, daß die entsprechenden Flanken der beiden Nuten 44 und 45 an die Führungsflächen 29 und 31 angepreßt werden. In dieser Stellung greift der Zahnstangenabschnitt 47 in die flexible Zahnstange 22 formschlüssig ein.

Um zu verhindern, daß im demontierten Zustand das Führungsstück 41 samt Zapfen 48 aus der Strebe 14a herausfällt, ist in ihrer offenen Stirnseite ein Ring 54 mit Oreßsitz eingesetzt, der gleichzeitig der Führung des Zapfens 48 zwischen dem Bund 49 und der benachbarten Rückseite des Führungsstückes 41 dient.

Die übrigen Streben 14b und 14c, gegebenenfalls auch die Strebe 14d, sind in derselben Weise mit Führungsstücken 41 versehen, wie dies im Zusammenhang mit der Strebe 14a beschrieben ist.

Eine Verbindung der übrigen Streben 14b und 14c mit der Synchronisiereinrichtung 19 ist nicht erforderlich, weil deren rechtwinklige Lage zu den Führungsschienen 9 und 11 zwangsläufig von der Rollobahn 15 aufrechterhalten wird, mit denen die Strebe zumindest in Querrichtung unbeweglich verbunden sind. Wenn nämlich der zwischen den Streben 14a und 14b befindliche Bereich der Rollobahn 15 gestrafft ist, wird die Strebe 14b parallel zur Strebe 14a hinterhergezogen.

Die Ausführungsform der Synchronisiereinrichtung 18 ist in Fig. 6 gezeigt. Im Inneren der Führungsschiene 9 sitzt über der Unterseite 25 ortsfest eine Zahnstange 62. Die Zahnstange 62 erstreckt sich in der Führungsschiene über den gesamten Hub, den die Strebe 14a bei der Bewegung zwischen der geschlossenen und der vollständig offenen Stellung des Abdeckrollos 8 zurücklegt. Die Strebe 14a ist wiederum als Rohr ausgeführt und sie dient der Lagerung einer durch sie hindurchführenden Welle 63, die an den beiden Enden der Strebe 14a in Lagerstücken 64, die in die Strebe 14a eingesetzt sind, drehbar gelagert ist. Auf, den über die Strebe 14a überstehenden Stummel der Welle 63 sind zwei Ritzel 65 drehfest aufgesteckt, die mit der Zahnstange 62 kämmen.

Bei der Bewegung der Strebe 14a im Sinne des Öffnens und Schließens des Abdeckrollos 8 wälzen sich die beiden Ritzel 65 auf den zugehörigen Zahnstangen 62 ab. Hierdurch ist, wie oben beschrieben, eine zwangsläufige Mitnahme auch des anderen Endes der Strebe 14a gewährleistet, wenn beim Öffnen und Schließen die Strebe 14a nur an einem Ende angefaßt und dort von Hand bewegt wird. Die synchonisierte Wälzbewegung der Ritzel 65 bewegt zwangsläufig auch das andere Ende der Strebe 14a mit.

Um ein Klappern der Strebe 14a in den Führungsschienen 9 und 11 zu verhindern bzw. ein Mitdrehen der Strebe innerhalb der entsprechenden Schlaufe der Rollobahn 15 zu verhindern, können die Lagerstücke 64 eine Gestalt haben wie die Führungsstücke 41, die bei den Streben 14b und 14c des vorerwähnten Ausführungsbeispiels erläutert sind, lediglich mit dem Unterschied, daß der Zapfen 48 und das Führungsstück 41 mit zu der Strebe 14a koaxialen Durchgangsbohrungen versehen sind, in denen die Welle 63 drehbar gelagert ist.

## Patentansprüche

1. Abdeckrollo (8) für den Laderaum (2) eines PKW, mit einer Rollobahn (15), die mit mehreren parallel zueinander verlaufenden und die Rollobahn (15) tragenden Streben (14) verbunden ist, sowie mit zwei in dem PKW angeordneten Führungsschienen (9,11), die beidseits des Laderaums (2) in Längsrichtung des PKW verlaufen, im Querschnitt C-förmig sind, mit einem in Längsrichtung durchgehenden Längsschlitz (26) versehen sind und mittels derer die Streben (14) endseits geführt sind, dadurch gekennzeichnet, daß wenigstens eine der beiden Führungsschienen (9, 11) neben ihrem Längsschlitz (26) mit Schrägflächen (29, 31) versehen ist, die in Richtung auf das Innere der Führungsschiene (9,11) zu konvergieren, daß sämtliche Streben (14) mit federvorgespannten Endstücken (41) versehen sind, die Anlageflächen (44, 45) tragen, die zu den konvergierenden Führungsflächen (29, 31) der Führungsschienen (9, 11) komplementär sind, daß wenigstens einer Strebe (14a) eine Sychronisiereinrichtung (19) zugeordnet ist, die die Längsbewegung eines Endes dieser Strebe (14a) parallel zu der Richtung der Führungsschienen (9, 11) auf das andere Ende derselben Strebe (14a) überträgt, und daß die der Synchronisiereinrichtung (18) zugeordnete Strebe (14a) ein Rohr aufweist, in dem eine Welle (63) drehbar gelagert ist, die endseitig drehfest zwei Zahnräder (65) trägt, die mit den ortsfest in den Führungsschienen (9,11) angeordneten Zahnstangen (62) im Bereich der Führungsschiene (9, 11) kämmen.

2. Abdeckrollo nach Anspruch 1, dadurch gekennzeichnet, daß lediglich die Strebe (14a), die beim Öffnen und Schließen der Abdeckung den größten Weg zurücklegt, mit der Synchronisiereinrichtung (18) versehen ist.

3. Abdeckrollo nach Anspruch 1, dadurch gekennzeichnet, daß die der Synchronisiereinrichtung (18) zugeordnete Strebe (14a) lösbar mit den parallel zu den Führungsschienen (9, 11) verlaufenden Zahnstangen (21,22) verbunden ist.

## Claims

1. Roller blinds (8) for the cargo space (2) of a passenger vehicle, comprising a web (15) connected with several struts (14) extending parallel to each other and supporting the web (15), as well as with two guide rails (9, 11) disposed in the passenger vehicle, said guide rails (9, 11) extending on both sides of the cargo space (2) in a longitudinal direction of the passenger vehicle and having a C-shaped cross-section, being provided with a longitudinal slot (26) continuously extending in a longitudinal direction and adapted to guide the ends of the struts (14), characterized in that at least one of the two guide rails (9, 11) are provided next to their longitudinal slot (26) with slanted surfaces (29, 31) converging in the direction of the inside of the guide rail (9, 11), that all of the struts (14) are provided with spring-loaded end pieces (41) carrying bearing surfaces (44, 45) complementary relative to the converging guiding surfaces
(29, 31) of the guide rails (9, 11), that at least one strut (14a) is associated with synchronization means (19) transferring the longitudinal movement of one end of this strut (14a) parallel to the direction of the guide rails (9, 11) onto the other end of the same strut (14a), and that the strut (14a) associated with the synchronization means (18) has a tube wherein a shaft (63) is rotatably mounted, which at its ends supports in a rotationally fixed manner two gears (65) intermeshing in the area of the guide rail (9, 11) with the rack (62) disposed in a stationary manner in the guide rails (9, 11).

2. Roller blinds as claimed in Claim 1, characterized in that only the strut (14a) covering the greatest distance during opening and closing of the blind is provided with the synchronization means (18).

3. Roller blinds as claimed in Claim 1, characterized in that the strut (14a) associated with the synchronization means (18) is detachably connected with the racks (21, 22) extending parallel to the guide rails (9, 11).

## Revendications

1. Store cache-bagages (8) pour le compartiment à bagages (2) d'une voiture particulière, comportant une bande de store (15) qui est liée à plusieurs barres-supports (14) qui s'étendent parallèlement les unes aux autres et supportent la bande de store (15) ainsi que deux glissières (9, 11) qui sont disposées à l'intérieur de la voiture particulière, s'étendent de chaque côté du compartiment à bagages dans la direction longitudinale de ladite voiture particulière, ont une section en forme de C, sont pourvues d'une fente longitudinale (26) continue dans la direction longitudinale et assurent le guidage des barres-supports (14) au niveau des extrémités de celles-ci, caractérisé par le fait qu'au moins une des deux glissières (9, 11), à proximité de sa fente longitudinale (26), est pourvue de surfaces inclinées (29, 31) qui convergent en direction de l'intérieur de la glissière (9, 11), que toutes les barres-supports (14) sont munies de pièces d'extrémité (41) sollicitées par ressort qui portent des surfaces de contact (44, 45) complémentaires des surfaces de guidage (29, 31) convergentes, par le fait qu'un dispositif de synchronisation (18) est associé à au moins une barre-support (14a), lequel dispositif de synchronisation transmet à l'autre extrémité de la barre-support (14a) le déplacement longitudinal d'une extrémité de ladite barre-support (14a) parallèlement à la direction des glissières (9, 11) et par le fait que la barre-support (14a) associée au dispositif de synchronisation (18) comporte un tube à l'intérieur duquel un arbre (63) est monté tournant, lequel arbre porte à ses extrémités deux roues dentées (65) qui sont solidaires en rotation dudit arbre et engrènent dans la région de la glissière (9, 11) avec les crémaillères (62) montées fixes dans les glissières (9, 11).

2. Store cache-bagages selon la revendication 1, caractérisé par le fait que seule la barre-support (14a) qui, lors de l'ouverture et de la fermeture du store cache-bagages parcourt la plus grande distance, est munie du dispositif de synchronisation (18).

3. Store cache-bagages selon la revendication 1, caracérisé par le fait que la barre-support (14a) associée au dispositif de synchronisation (18) est liée avec possibilité de démontage aux crémaillères (21, 22) qui s'étendent parallèlement aux glissières (9, 11).
